# EUROPEAN PATENT APPLICATION

(11) **EP 2 565 739 A2**
(43) Date of publication of application: **06.03.2013**
(21) Application number: 12182343.9
(22) Date of filing: 30.08.2012
(51) Int. Cl.: G05B 19/042

(54) **System and method of managing device parameter values when importing Device Definition (DD) files**

(30) Priority: 31.08.2011 US 201113223246
(71) Applicant: General Electric Company, Schenectady, NY 12345 (US)
(72) Inventor: Galt, William Kennedy, Salem, VA Virginia 24153-6422 (US); Mcmillan, David Evans, Salem, VA Virginia 24153-6422 (US); Kreft, Dana Robert, Salem, VA Virginia 24153-6422 (US)
(74) Representative: Picker, Madeline Margaret

(57) **Abstract**

An industrial process control system (10) includes a field device (38, 40, 42, 44) having a first plurality of device parameter values (123) corresponding to a plurality of device parameters. The industrial process control system also includes a processor (12) configured to determine a second plurality of device parameter values (125), corresponding to the plurality of device parameters, from a device definition (DD) file (109). The processor (12) is also configured to present a reconciliation tool (134) comprising a first portion of the plurality of device parameters, the corresponding first plurality of device parameter values (123), and the corresponding second plurality of device parameter values (125). The processor is also configured to set a second portion of the plurality of device parameters to the corresponding second plurality of device parameter values (125) based on instructions received from the reconciliation tool (134).

## Description

### BACKGROUND OF THE INVENTION

The subject matter disclosed herein relates to industrial process control systems.

Certain systems, such as an industrial control system, may provide for control capabilities that enable the execution of control instructions in various types of devices, such as sensors, pumps, valves, and the like. As such, the various devices may include files that define the presentation, parameters, and behaviors of the devices in the control system network. Unfortunately, when upgrading these files in existing systems, the values defined in the files typically overwrite existing values upon import. Accordingly, parameter values that have been previously customized by the operator may be lost during the upgrade process.

### BRIEF DESCRIPTION OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In an embodiment, an industrial process control system includes a field device having a first plurality of device parameter values corresponding to a plurality of device parameters. The industrial process control system also includes a processor configured to determine a second plurality of device parameter values, corresponding to the plurality of device parameters, from a device definition (DD) file. The processor is also configured to present a reconciliation tool comprising a first portion of the plurality of device parameters, the corresponding first plurality of device parameter values, and the corresponding second plurality of device parameter values. The processor is also configured to set a second portion of the plurality of device parameters to the corresponding second plurality of device parameter values based on instructions received from the reconciliation tool.

In another embodiment, a method includes determining a first device parameter value corresponding to a device parameter of a field device and determining a second device parameter value, also corresponding to the device parameter, from a device definition (DD) file. The method also includes presenting a reconciliation tool including the first and second device parameter values and receiving instructions from the reconciliation tool to assign either the first device parameter value or the second device parameter value to the device parameter of the field device. The method also includes assigning the first or second device parameter value to the device parameter of the field device based on the received instructions.

In another embodiment, a non-transitory, tangible computer readable medium including executable code, the code including instructions for determining a first plurality of device parameter values corresponding to a plurality of device parameters, and determining a second plurality of device parameter values, also corresponding to the plurality of device parameters, from a device definition (DD) file. The code also includes instructions for compiling a reconciliation list comprising at least one parameter of the plurality of device parameters with different first and second values for the corresponding first and second plurality of device parameter values. The code also includes instructions for presenting a reconciliation tool comprising the reconciliation list and input mechanisms to enable selections of either the first value of the first plurality of device parameter values or the second value of the second plurality of device parameter values for the at least one parameter of the plurality of device parameters in the reconciliation list. The code also includes instructions for assigning at least one value of the first or second plurality of device parameter values to a corresponding one of the plurality of device parameter values based on the selections.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a schematic diagram of an embodiment of an industrial process control system;
FIG. 2 is another schematic diagram of an embodiment of an industrial control system;
FIG. 3 is a flow diagram illustrating an embodiment of a process for selecting a Device Definition (DD) file to use in a DD file upgrade process;
FIG. 4 is a flow diagram illustrating an embodiment of a DD file upgrade process; and
FIG. 5 is a screen shot of an embodiment of a reconciliation tool that an operator may use to reconcile DD file upgrade values.

### DETAILED DESCRIPTION OF EMBODIMENTS OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

A Fieldbus Foundation device includes a Fieldbus Foundation Device Definition (DD) file, which may be provided by the manufacturer and includes information about the device in a format that is defined by the Fieldbus Foundation standards. This DD file may include device parameters such as settings, operational ranges, device descriptions, icons to present the device on a graphical user interface, function blocks, and the like. When a Fieldbus Foundation device is added to an industrial process control system, the DD file may be imported into an application such that the device information stored within the DD file may be used by the control system to manage the device. Furthermore, the application may allow an operator to customize certain device parameters after the DD file is imported.

After one or more device parameters have been modified, however, it may be desirable to import a subsequent DD file if, for example, the device manufacturer releases an upgraded DD file for the device. In such instances, certain device parameters may remain set to the customized values set by the operator, while other parameters may be set to the values in the subsequent DD file. Accordingly, the disclosed embodiments provide a DD file upgrade process that determines the current device parameter values that differ from the DD file parameter values. Additionally, the disclosed embodiments includes a user interface that enables the operator to reconcile which values will be applied to each device parameter in question.

It should be noted that the term "upgrade" is used herein to describe the process of updating at least a portion of the existing Fieldbus Foundation parameter values of a device using parameter values from a particular DD file. That is, the DD file used for the upgrade process may, under certain circumstances, be an older revision of the DD file than was initially imported, or previously upgraded, for the device. As such, the term "upgrade," as used herein, extends beyond updating device parameters using only newer revisions of DD files. Accordingly, the present embodiments enable upgrading or downgrading a device's current parameter values to parameter values from any revision of the DD file accessible by the system.

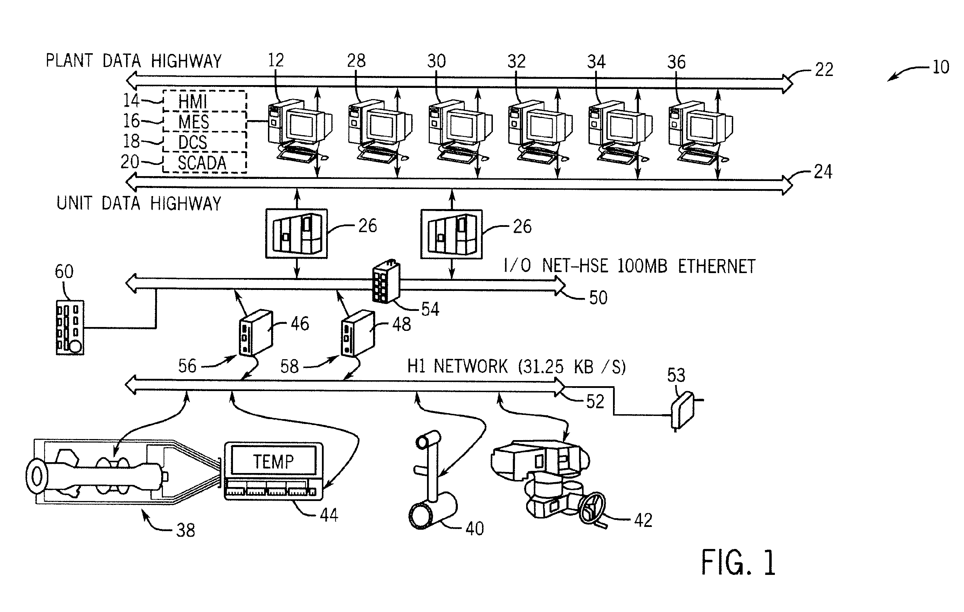

With the foregoing in mind, turning to FIG. 1, an embodiment of an industrial process control system 10 is depicted. The control system 10 may include a computer 12 suitable for executing a variety of field device configuration and monitoring applications, and for providing an operator interface through which an engineer or technician may monitor the components of the control system 10. The computer 12 may be any type of computing device suitable for running software applications, such as a laptop, a workstation, a tablet computer, or a handheld portable device (e.g., personal digital assistant or cell phone). Indeed, the computer 12 may include any of a variety of hardware and/or operating system platforms. In accordance with one embodiment, the computer 12 may host an industrial control software, such as a human-machine interface (HMI) software 14, a manufacturing execution system (MES) 16, a distributed control system (DCS) 18, and/or a supervisor control and data acquisition (SCADA) system 20. For example, the computer 12 may host the ControlST™ software, available from General Electric Co., of Schenectady, New York.

Further, the computer 12 is communicatively connected to a plant data highway 22 suitable for enabling communication between the depicted computer 12 and other computers 12 in the plant. Indeed, the industrial control system 10 may include multiple computers 12 interconnected through the plant data highway 22. The computer 12 may be further communicatively connected to a unit data highway 24, suitable for communicatively coupling the computer 12 to industrial controllers 26. The system 10 may include other computers coupled to the plant data highway 22 and/or the unit data highway 24. For example, embodiments of the system 10 may include a computer 28 that executes a virtual controller, a computer 30 that hosts a Workstation Ethernet Global Data (EGD) configuration server, an Object Linking and Embedding for Process Control (OPC) Data Access (DA) server, an alarm server, or a combination thereof, a computer 32 hosting a General Electric Device System Standard Message (GSM) server, a computer 34 hosting an OPC Alarm and Events (AE) server, and a computer 36 hosting an alarm viewer. In certain embodiments, computer 12 may host ToolboxST™, available from General Electric Co., of Schenectady, New York. Other computers coupled to the plant data highway 22 and/or the unit data highway 24 may include computers hosting Cimplicity™ and ControlST™_{.}

The system 10 may include any number and suitable configuration of industrial controllers 26. For example, in some embodiments the system 10 may include one industrial controller 26 or two, three, or more industrial controllers 26 for redundancy. The industrial controllers 26 may enable control logic useful in automating a variety of plant equipment, such as a turbine system 38, a valve 40, and a pump 42. Indeed, the industrial controller 26 may communicate with a variety of devices, including but not limited to temperature sensors 44, flow meters, pH sensors, vibration sensors, clearance sensors (e.g., measuring distances between a rotating component and a stationary component), and pressure sensors. The industrial controller 26 may further communicate with electric actuators, switches (e.g., Hall switches, solenoid switches, relay switches, limit switches), and so forth.

In the depicted embodiment, the turbine system 38, the valve 40, the pump 42, and the temperature sensor 44 are communicatively interlinked to the automation controller 26 by using linking devices 46 and 48 suitable for interfacing between an I/O NET 50 and a H1 network 52. For example, the linking devices 46 and 48 may include the FG-100 linking device, available from Softing AG, of Haar, Germany. In some embodiments, a linking device, such as the linking device 48, may be coupled to the I/O NET through a switch 54. In such an embodiment, other components coupled to the I/O NET 50, such as one of the industrial controllers 26, may also be coupled to the switch 54. Accordingly, data transmitted and received through the I/O NET 50, such as a 100 Megabit (MB) high speed Ethernet (HSE) network, may in turn be transmitted and received by the H1 network 52, such as a 31.25 kilobit/sec network. That is, the linking devices 46 and 48 may act as bridges between the I/O Net 50 and the H1 network 52. Accordingly, a variety of devices may be linked to the industrial controller 26 and to the computer 12. For example, the devices, such as the turbine system 38, the valve 40, the pump 42, and the temperature sensor 44, may include industrial devices, such as Fieldbus Foundation™ devices that include support for the Foundation H1 bi-directional communications protocol. In such an embodiment, a Fieldbus Foundation power supply 53, such as a Phoenix Contact Fieldbus Power Supply available from Phoenix Contact of Middletown, PA, may also be coupled to the H1 network 52 and may be coupled to a power source, such as AC or DC power. The devices 38, 40, 42, and 44 may also include support for other communication protocols, such as those included in the HART® Communications Foundation (HCF) protocol, and the Profibus Nutzer Organization e.V. (PNO) protocol.

Each of the linking devices 46 and 48 may include one or more segment ports 56 and 58 useful in segmenting the H1 network 52. For example, the linking device 46 may use the segment port 56 to communicatively couple with the devices 38 and 44, while the linking device 48 may use the segment port 58 to communicatively couple with the devices 40 and 42. Distributing the input/output between the devices 38, 44, 40, and 42 by using, for example, the segment ports 56 and 58, may enable a physical separation useful in maintaining fault tolerance, redundancy, and improving communications time. In some embodiments, additional devices may be coupled to the I/O NET 50. For example, in one embodiment an I/O pack 60 may be coupled to the I/O NET 50.

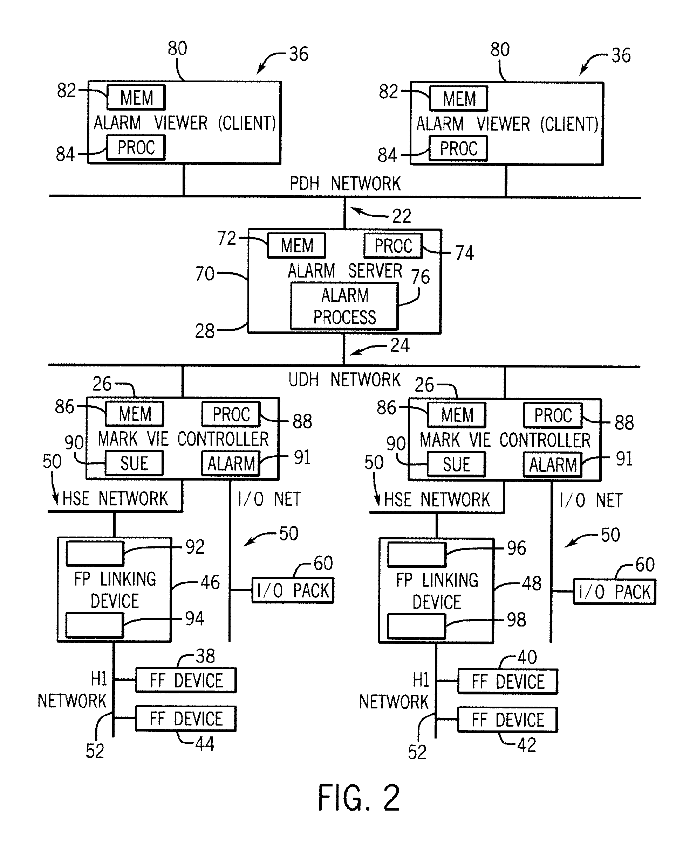

In certain embodiments, the devices 38, 40, 42, and 44 may provide data, such as alerts, to the system 10. These alerts may be handled in accordance with the embodiments described below. FIG. 2 depicts a block diagram of an embodiment of the system 10 depicting various components in further detail. As described above, the system 10 may include an alarm server 70, executed on the computer 28, coupled to the plant data highway 22 and the unit data highway 24. The computer 28 may include a memory 72, such as non-volatile memory and volatile memory, and a processor 74, to facilitate execution of the alarm server 70. The alarm server 70 may execute an alarm process 76 for receiving, processing, and responding to alarms received from the controllers 26.

The system 10 may include additional computers 36 coupled to the plant data highway 22 that may execute alarm viewers 80. The alarm viewers 80 may enable a user to view and interact with the alarms processed by the alarm server 70. The computers 36 may each include a memory 82 and a processor 84 for executing the alarm viewer 80. Additionally, in some embodiments, the alarm viewers 80 may be executed on the computer 28 or any of the computers described above in FIG. 1. The alarm server 70 may communicate with the alarm viewers 80 using any suitable alarm data protocol interpretable by the alarm viewers 80.

As described above, the controllers 26 are coupled to the unit data highway 24, and the controllers 26 may communicate with the alarm server 70 over the unit data highway 24. For example, in one embodiment, the controllers 26 and alarm server 70 may communicate using a serial data interface (SDI) alarm protocol. The controllers 26 may each include a memory 86 and a processor 88 for executing the functions of the controllers 26. In one embodiment, the controllers 26 may execute a sequence of events (SOE) process 90 and an alarm process 91. As mentioned above, the controllers 26 may be coupled to the I/O pack 60 over the I/O NET 50. In one embodiment, the I/O pack 60 may communicate with the controllers 26 using the ADL protocol.

As also described above, the controllers 26 may be coupled to linking devices 46 and 48 through an I/O NET 50. The linking devices 46 and 48 may communicate with the controllers 26 over the I/O NET 50. The linking devices 46 and 48 may be coupled to the H1 network 52, and one linking device 46 may be coupled to devices 38 and 44 and another linking device 48 may be coupled to device 40 and 42. The linking device 46 may include a memory 92, such as volatile and non-volatile memory, and a processor 94, and the linking device 48 may include a memory 96, such as volatile and non-volatile memory, and a processor 98. In one embodiment, the linking devices 46 and 48 may communicate with the controllers 26 using the Fieldbus Foundation protocol.

The system 10 may enable alarm and diagnostic information to be communicated from the various devices to a user, such as through the HMI 14 and the alarm viewers 80. For example, the Fieldbus Foundation devices 38, 40, 42, and 44 may provide an alert to the controller 26. The alert may be provided from the controller 26 to the alarm server 70, which may process the alert and provide a corresponding alarm to the HMI 14, the alarm viewers 80, or any other computers coupled to the unit data highway 24 or plant data highway 22.

Fieldbus Foundation devices 38, 40, 42, and 44 may include a Fieldbus Foundation Device Definition (DD) file that may be provided by the device manufacturer based upon the Fieldbus Foundation specification. As such, a DD file may include instructions written in the International Electrotechnical Commission (IEC) 61804 language standard. A DD file may include device parameters or attributes (e.g., device identifiers, revision numbers, operational ranges, etc.), descriptions (e.g., device descriptions, parameter descriptions, alarm descriptions, etc.), graphical symbols or icons to represent the device (e.g., icon for healthy device, icon for device with alarm active, icon for deactivated device, etc.), and software blocks (e.g., sets of instructions that define actions for the device and the control system in response to certain events). The DD file may be in a binary format that is interpretable by the Fieldbus Foundation components of the control system network (e.g., controller 26).

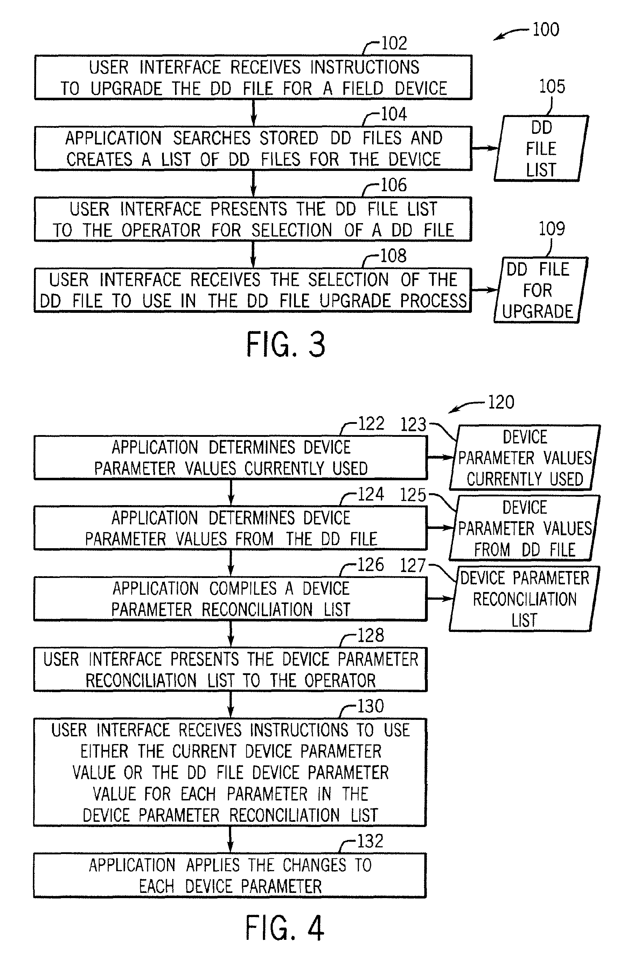

FIG. 3 is a flow diagram that illustrates an embodiment of a process 100 for selecting a specific DD file for use in a DD file upgrade process described in below. In some embodiments, some or all of the aspects of the process 100 described below may be implemented as executable code instructions stored on non-transitory, tangible, computer-readable media, such as the memory 72 of the alarm server 70, the memory 82 of the alarm viewer 80, the memory 86 of the controllers 26, or the memory of the computer 12 executing the ControlST™ or ToolboxST™ application. In general, FIG. 3 depicts actions of an application (e.g., ToolboxST™) and a corresponding user interface (e.g., a user interface of the ToolboxST™ application) during the DD file selection process 100.

The process 100 begins with the user interface of the application receiving (block 102) instructions to upgrade the DD file for a device. For example, the user interface may first display a list of Fieldbus Foundation devices (e.g., field devices 38, 40, 42, or 44) and, upon selection of a particular Fieldbus Foundation device, the user interface may provide an "Upgrade DD File" option for the selected device. Accordingly, using such an option in the user interface, the operator may instruct the application that the Fieldbus Foundation parameters for the selected field device are to be upgraded using a DD file.

After receiving instructions to upgrade the DD file for the Fieldbus Foundation device, the application (e.g., the ToolboxST™ application) may search (block 104) for and determine a list of DD files 105 for the device. That is, a plurality of DD files for each field device (e.g., devices 38, 40, 42, and 44) in the industrial process control network 10 may be stored, for example, on a non-transitory memory (e.g., a hard drive or solid state disk) of a computer 12 executing the Toolbox ST application. Accordingly, the application may search one or more directories stored on the memory to locate DD files compatible with the Fieldbus Foundation device. In certain embodiments, the application may communicate with another system (e.g., Alarm Server 70) acting as a central repository for DD file storage in order to search for DD files (e.g., stored on memory 72) for the Fieldbus Foundation device.

After assembling the list of DD files 105 for the Fieldbus Foundation device, the user interface (e.g., a DD file selection user interface) may present (block 106) the list of DD files 105 to the operator so that the operator may select a file for the DD file upgrade process detailed below. The list of DD files 105 may include a plurality of DD files, each representing a different revision of the DD file supplied by the device manufacturer. In certain embodiments, the user interface may sort the list of DD files 105 by revision or release date such that the operator may easily navigate the list to locate a particular DD file. Additionally, in certain embodiments, the user interface may indicate (e.g., via a flag, highlighting, or other suitable indicator) which DD files were previously imported or used to upgrade the device. Furthermore, in certain embodiments, the user interface may include an option for the operator to manually search for DD files to import from locations that were not searched by the application, such as removable media (e.g., CD-ROM or USB drive) provided by the device manufacturer containing DD files. The list of DD files 105, as presented to the operator, includes one or more mechanisms (e.g., a button, a checkbox, a hyperlink, etc.) enabling the operator to select a particular DD file from the list 105. As such, when the operator selects the DD file, the user interface subsequently receives (block 108) the selection of the DD file 109 for the DD file upgrade process from the operator.

Accordingly, using the process 100 described above, the application may obtain the selection of a particular DD file 109 for the DD file upgrade process. The DD file 109 may define a plurality of parameter values for a Fieldbus Foundation device that may or may not differ from the parameter values that are currently used for the device. FIG. 4 illustrates an embodiment of the DD file upgrade process 120 in which the application reconciles the current device parameter values with the device parameter values from the DD file 109. In general, FIG. 4 depicts actions of an application (e.g., ToolboxST™) and a corresponding user interface (e.g., a user interface of the ToolboxST™ application) during the DD file upgrade process 120. In some embodiments, some or all of the aspects of the process 120 described below may be implemented as executable code instructions stored on non-transitory, tangible, computer-readable media, such as the memory 72 of the alarm server 70, the memory 82 of the alarm viewer 80, the memory 86 of the controllers 26, or the memory of the computer 12 executing the ControlST™ or ToolboxST™ application.

The process 120 begins with the application determining (block 122) field device parameter values 123 currently used by the device. In certain embodiments, the currently used device parameter values 123 may be determined from a file stored in a non-transitory memory of the computer (e.g., computer 12) executing the application. In other embodiments, the currently used device parameter values 123 may additionally or alternatively be determined by requesting these parameter values from other components in the control system network 10, such as the Alarm Server 70, the controller 26, or the field device itself (e.g., Fieldbus Devices 38, 40, 42, or 44). In certain embodiments, the device parameter values currently used 123 may be stored as a strings, a table, or an array in memory (e.g., the memory of computer 12) by the application for later comparison.

Next, the application may determine (block 124) the device parameter values from the DD file 125. For example, the application may open the selected DD file 109 from a non-transitory memory (e.g., a hard disk drive or solid state disk) and read the contents of the file in order to determine the device parameter values from the DD file 125. In certain embodiments, the device parameter values from the DD file 125 may be stored as strings, a table, or an array in memory (e.g., the memory of computer 12) by the application for later comparison. Since the DD file may be partially or completely encoded (e.g., in binary), in certain embodiments the DD file 125 may be converted, translated, and/or parsed into plain text representations of the device parameters and their corresponding values during this step.

The application then compiles (block 126) a device parameter reconciliation list 127 that includes each of the device parameters and device parameter values where the currently used device parameter value 123 differs from the device parameter value from the DD file 125. For example, the Fieldbus Foundation device 40 may include a "UNITS_INDEX" parameter that defines which units (e.g., mbar, psi, torr, etc.) may be used when the device 40 is communicating pressure values to the remainder of the industrial process control system 10. Furthermore, the device parameter value currently used 123 by device 40 for the "UNITS_INDEX" parameter may be "mbar," while the device parameter value from the DD file 125 for the "UNITS_INDEX" parameter may be "psi." Since the values differ, the "UNITS_INDEX" parameter would be added to the device parameter reconciliation list 127, along with the currently used device parameter value (e.g., "mbar") and the device parameter value from the DD file 125 (e.g., "psi"). In certain embodiments, the device parameter reconciliation list may be implemented as an array or a table stored in memory (e.g., memory of computer 12). By further example, the Fieldbus Foundation device 40 may include a "HI_LIM" parameter that defines a numerical range for an operational parameter of the device outside of which an alarm may be generated. Furthermore, the device parameter value currently used 123 by device 40 for the "HI_LIM" parameter may be "50" while the device parameter value from the DD file 125 for the "HI_LIM" parameter may be "100." Since the values differ, the "HI_LIM" parameter would be added to the device parameter reconciliation list 127, along with the currently used device parameter value (e.g., 50) and the device parameter value from the DD file 125 (e.g., 100). In certain embodiments, the device parameter reconciliation list may be implemented as an array or a table stored in memory (e.g., memory of computer 12).

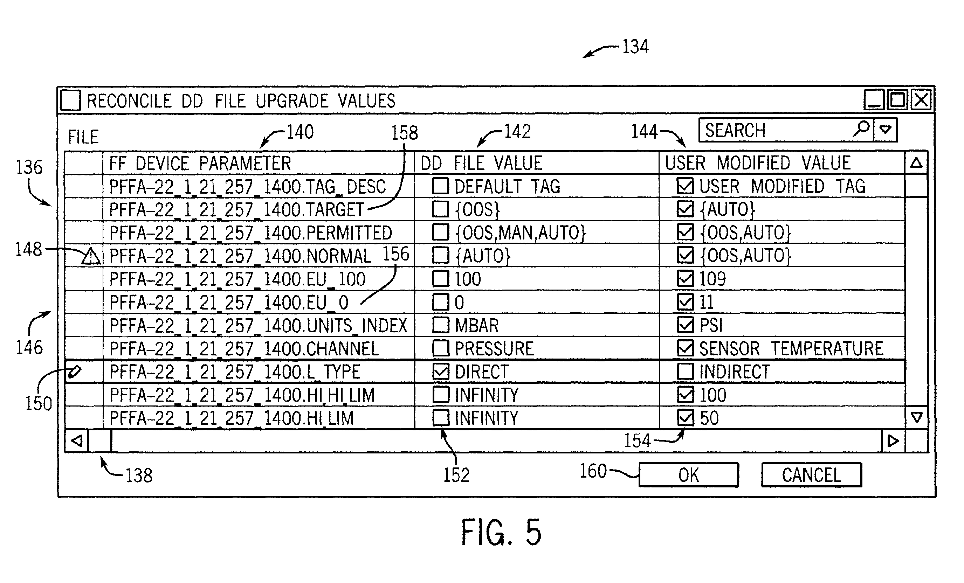

After it has been compiled, the application may present (block 128) the device parameter reconciliation list 127 to the operator (e.g., via a reconciliation tool user interface) such that the operator may reconcile each device parameter in the list 127. An embodiment of the reconciliation tool user interface is described below in FIG. 5. The reconciliation tool enables an operator to select the desired value for each device parameter in the device parameter reconciliation list 127. The reconciliation tool user interface receives (block 130) the instructions to use either the current device parameter value or the DD file device parameter value for each parameter in the device parameter reconciliation list 127. That is, the reconciliation tool enables the operator to visually assess the differences between the device parameter values currently used 123 and the device parameter values from the DD File 125 in a streamlined fashion, such that the operator can decide which device parameter values to set to the device parameter values from the DD File 125.

Finally, the application applies (block 132) the appropriate changes to each parameter of the field device according to the instructions received from the reconciliation tool for the parameters in the device parameter reconciliation list 127. Accordingly, each device parameter of the field device (e.g., field device 38, 40, 42, or 44) that the operator instructs the application to set to the device parameter value from the DD file 125 is changed to this value (i.e., from the selected DD file 109), rather than maintaining its current value. In certain embodiments, the application may instruct a controller 26 to set the device parameters of the field device (e.g., field device 38, 40, 42, or 44) according to the instructions of the operator. In certain embodiments, the instructions may traverse the plant data highway 22, the unit data highway 24, the HSE Ethernet 50, and/or the H1 network 52 prior to arriving at the field device. In certain embodiments, the application may make a record of the DD file upgrade event such that a DD file upgrade history of the field device may be maintained.

FIG. 5 illustrates a screen shot for an embodiment of a reconciliation tool user interface 134 that the operator may use to reconcile currently used device parameter values 123 with the device parameter values from the DD file 125. The reconciliation tool 134 may, for example, be implemented as a portion of the user interface of the ToolboxST™ application. In some embodiments, some or all of the aspects of the reconciliation tool 134 may be implemented as executable code instructions stored on non-transitory, tangible, computer-readable media, such as the memory 72 of the alarm server 70, the memory 82 of the alarm viewer 80, the memory 86 of the controllers 26, or the memory of the computer 12 executing the ControlST™ or ToolboxST™ application.

The embodiment of FIG. 5 illustrates the device parameter reconciliation list 127 in the form of a table 136 that includes a flag column 138, a "FF Device Parameter" column 140, a "DD File Value" column 142, and a "User Modified Value" column 144. The rows 146 of the table 136 each include a single device parameter from the device parameter reconciliation list 127. The flag column 138 of the table 136 may be used to indicate that a row contains an error or issue (e.g., warning 148), or may also be used to indicate that a particular row is currently being edited (e.g., edit indicator 150). The "FF Device Parameter" column 140 may be used to display the name of each device parameter from the device parameter reconciliation list 127. In the illustrated embodiment, the "FF Device Parameter" column 140 includes both the device name, e.g., "PFFA-22_1_21_257_1400," and the device parameter name (e.g., "TAG_DESC," "TARGET," "PERMITTED," etc.) in a dot notation (i.e., "Device_Name.Parameter" format).

The "DD File Value" column 142 may be used to display a representation of the device parameter values from the DD file 125 for each parameter from the device parameter reconciliation list 127, along with an input mechanism 152 (e.g., a checkbox, radio button, select box, or other suitable mechanism) to allow the displayed value to be selected by the operator. Similarly, the "User Modified Value" column 144 may be used to display a representation of the currently used device parameter values 123 for each parameter from the device parameter reconciliation list 127, along with an input mechanism 154 (e.g., a checkbox, radio button, or other suitable mechanism) to allow the displayed value to be selected by the operator. For simple data types, such as Boolean values, integer or real number values, and strings, the representations displayed for the device parameter value may simply be the value or a synonym for the value (e.g., "true" and "false" for Boolean values 1 and 0, respectively). For example, row 156 of the illustrated table 136 includes a device parameter with an integer value, and the parameter value displayed in the "DD File Value" column 142 is "0", while the parameter value displayed in the "User Modified Value" column 144 is "11". In contrast, complex data types, such as objects, records, arrays, and tables may instead be displayed as a representation. For example, the row 158 of the illustrated table 136 includes a complex data type (e.g., a record), and the parameter value displayed in the "DD File Value" column 142 is "{OOS}" while the parameter value displayed in the "User Modified Value" column is "{Auto}."

The input mechanisms 152 and 154 are generally configured to be selected in a mutually exclusive manner. That is, even if the input mechanisms 148 and 150 are implemented as a checkboxes, only one of the checkboxes 152 or 154 may be selected at one time for each FF device parameter 140, similar to the normal behavior of a radio button. Accordingly, the user interface 134 may contain executable code which, upon the selection of one of the input mechanisms (e.g., input mechanism 152), the other input mechanism (e.g., input mechanism 154) may be automatically de-selected. After the operator selects either input mechanism 152 or 154 for each of the rows 146 of the table 136, the operator may use the "OK" button 160 at the bottom of the reconciliation tool 134 to complete the process. Subsequently, when the "OK" button 160 is selected, the reconciliation tool 134 may receive the selections of the operator for each device parameter and translate these selections into a series of instructions for the application to change the value of particular device parameters accordingly.

It should be noted that unique circumstances may also arise in the DD file upgrade process 120. For example, when upgrading to a newer revision of a DD file, a new device parameter may be added that was not present in previous DD files released for the device and, therefore, not currently used by the device. By further example, when upgrading to an older revision of a DD file, a device parameter that is currently used by the device may not be present in the DD file. As such, when the application is compiling (block 126) the device parameter reconciliation list 127, the application may add any parameter that is not included in the DD file, but is currently used by the device, or any parameter that is included in the DD file but is not currently used by the device, to the device parameter reconciliation list 127. It should be noted that in such circumstances, when the device parameter is presented in the reconciliation tool 134, it may include the parameter value that is present (e.g., the DD file value or the currently used value) selected by default.

Technical advantages of the invention include being able to maintain user-modified device parameter values when upgrading a DD file for a field device. The disclosed embodiments enable the application of all, none, or any portion of the parameter values contained in a DD file to the parameters of a field device based on instructions received from the operator. A device parameter reconciliation tool may provide a user interface to enable an operator to quickly determine which device parameters would be modified by a DD file upgrade, and to choose whether to use the current device parameter value or the DD file parameter value for each such device parameter. By allowing the operator to manage changes to device parameter values in a streamlined fashion, the present embodiments enable the operator to maintain appropriate device parameter values without overwriting previously used device parameter values or manually resetting device parameter values after the upgrade process. Furthermore, the operator may manage changes to device parameter values across multiple DD file upgrades in a manner that reduces cost, time, and operator error.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. An industrial process control system (10), comprising:
a field device (38, 44, 40, 42) comprising a first plurality of device parameter values (123) corresponding to a plurality of device parameters; and
a processor (12) configured to:
determine a second plurality of device parameter values (125) corresponding to the plurality of device parameters from a device definition (DD) file (109);
present a reconciliation tool user interface (134) comprising a first portion of the plurality of device parameters, the corresponding first plurality of device parameter values (123), and the corresponding second plurality of device parameter values (125); and
set a second portion of the plurality of device parameters to the corresponding second plurality of device parameter values (125) based on instructions received from the reconciliation tool user interface (134).

2. The system (10) of claim 1, wherein the processor (12) is configured to present a DD file selection user interface for a selection of the DD file (109), and configured to receive the selection of the DD file (109) from the DD file selection user interface.

3. The system (10) of claim 1 or claim 2, wherein the processor (12) is configured to determine the first plurality of device parameter values (123) by querying the field device (38, 44, 40, 42).

4. The system (10) of claim 1, 2 or 3, wherein the processor (12) is configured to determine the first plurality of device parameter values (123) by reading a local file.

5. The system (10) of any preceding claim, wherein the processor (12) is configured to determine the first plurality of device parameter values (123) by querying an alarm server (70) or a controller (26) over a network (22, 24, 50, 52).

6. The system (10) of any preceding claim, wherein the processor (12) is configured to perform one or more of converting, translating, or parsing the DD file (109) to determine the second plurality of device parameter values (125).

7. The system (10) of any preceding claim, wherein the first portion of the plurality of device parameters comprises at least one of the plurality of device parameters with different values for the corresponding first (123) and second (125) plurality of device parameter values.

8. The system (10) of any preceding claim, wherein the reconciliation tool (134) is configured to enable a selection of a respective first one of the first plurality of device parameter values (123) or a respective second one of the second plurality of device parameter values (125) for each of the first portion of the plurality of device parameters.

9. The system (10) of claim 8, wherein the second portion of the plurality of device parameters comprises at least one parameter of the first portion of the plurality of device parameters with a respective value from the corresponding second plurality of device parameter values (125) selected in the reconciliation tool (134).

10. The system (10) of claim 8 or claim 9, wherein:
the reconciliation tool (134) is configured to receive selections for each of the first portion of the plurality of device parameters, and the reconciliation tool is configured to provide instructions to set the second portion of the plurality of device parameters based on the received selections; and/or
the reconciliation tool (134) is configured select a default value for each of the plurality of device parameters, wherein each default value comprises a respective one of the first plurality of device parameter values (123).

11. A method (120), comprising:
determining (122) a first device parameter value (123) corresponding to a device parameter of a field device (38, 40, 42, 44);
determining (124) a second device parameter value (125), corresponding to the device parameter, from a device definition (DD) file (109);
presenting (128) a reconciliation tool (134) comprising the first (123) and second (125) device parameter values;
receiving (130) instructions from the reconciliation tool (134) to assign either the first (123) or the second (125) device parameter value to the device parameter of the field device (38, 40, 42, 44); and
assigning (132) either the first (123) or second (125) device parameter value to the device parameter of the field device (38, 40, 42, 44) based on the received instructions.

12. The method (120) of claim 11, comprising presenting (106) a DD file selection user interface to select the DD file, and receiving (108) a selection of the DD file (109) from the DD file selection user interface.

13. The method (120) of claim 11 or claim 12, wherein determining (122) the first device parameter value (123) comprises querying one or more of the field device (38, 40, 42, 44), a local file, an alarm server (70), or a controller (26).

14. The method (120) of claim 11, 12 or 13, wherein determining (124) the second device parameter value (125) comprises one or more of converting, translating, or parsing the DD file (109).

15. The method of claim 11, 12, 13 or 14, wherein the reconciliation tool comprises a first and second input mechanism for selecting either the first or second device parameter value, respectively, and preferably the first input mechanism is selected by default.

16. A non-transitory, tangible computer readable medium comprising executable code, the code comprising instructions for performing the method of any one of claims 11 to 15.
